(19) **Europäisches Patentamt / European Patent Office / Office européen des brevets**

(11) **EP 3 046 788 B1**

(12) # FASCICULE DE BREVET EUROPEEN

(45) Date de publication et mention
de la délivrance du brevet:
**05.07.2017 Bulletin 2017/27**

(21) Numéro de dépôt: **14767053.3**

(22) Date de dépôt: **28.08.2014**

(51) Int Cl.:
**B60H 1/00** *(2006.01)* **B60H 1/32** *(2006.01)*
**B60P 3/20** *(2006.01)* **F24F 5/00** *(2006.01)*

(86) Numéro de dépôt international:
**PCT/FR2014/052135**

(87) Numéro de publication internationale:
**WO 2015/040301 (26.03.2015 Gazette 2015/12)**

(54) **PROCÉDÉ DE GESTION DU FONCTIONNEMENT D'UN CAMION DE TRANSPORT FRIGORIFIQUE DE PRODUITS THERMOSENSIBLES PAR MODULATION DE LA PUISSANCE FRIGORIFIQUE**

VERFAHREN ZUR VERWALTUNG DES BETRIEBS EINES KÜHLWAGENS ZUM TRANSPORT VON WÄRMEEMPFINDLICHEN PRODUKTEN DURCH MODIFIZIERUNG DER KÄLTELEISTUNG

METHOD OF MANAGING THE OPERATION OF A REFRIGERATED TRUCK FOR TRANSPORTING HEAT-SENSITIVE PRODUCTS BY MODIFYING THE REFRIGERATION POWER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.09.2013 FR 1358956**

(43) Date de publication de la demande:
**27.07.2016 Bulletin 2016/30**

(73) Titulaire: **L'Air Liquide Société Anonyme pour l'Etude et l'Exploitation des Procédés Georges Claude 75007 Paris (FR)**

(72) Inventeurs:
• **YOUBI-IDRISSI, Mohammed F-91300 Massy (FR)**
• **DALLAIS, Antony F-91640 Janvry (FR)**

(74) Mandataire: **Mellul-Bendelac, Sylvie Lisette L'Air Liquide Direction des Services De la Propriété Intellectuelle 75, Quai d'Orsay 75321 Paris Cedex 07 (FR)**

(56) Documents cités:
**EP-A2- 0 599 610    US-A- 5 287 705
US-A- 5 365 744    US-A1- 2003 029 179**

**Description**

La présente invention concerne le domaine du transport et de la distribution de produits thermosensibles, tels les produits pharmaceutiques et les denrées alimentaires, et elle s'intéresse tout particulièrement aux technologies où le froid nécessaire au maintien en température des produits est fourni par un groupe cryogénique fonctionnant en boucle ouverte et mettant en oeuvre :

- une injection directe d'un fluide cryogénique dans la caisse de transport (très souvent de l'azote liquide) ; ou
- une injection dite « indirecte » d'un fluide cryogénique dans la caisse de transport (très souvent de l'azote liquide), technique « indirecte » souvent appelée « CTI » qui met en oeuvre un ou plusieurs échangeur(s) de chaleur dans l'enceinte interne où sont transportés les produits (on parle aussi de « chambre », de « boite », de « caisse » isotherme...), échangeur dans lequel circule le fluide cryogénique (tel l'azote liquide ou le $CO_2$ liquide), l'enceinte étant par ailleurs munie d'un système de circulation d'air (ventilateurs) mettant en contact cet air avec les parois froides de l'échangeur, ce qui permet ainsi de refroidir l'air interne à la chambre froide du camion, le fluide cryogénique alimentant le ou les échangeur(s) provenant d'un réservoir de cryogène traditionnellement situé sous le camion (réservoir lui-même alimenté quand c'est nécessaire à partir d'un réservoir amont, fixe ou mobile mais en tout cas non attaché au véhicule).

Un procédé de gestion d'un camion frigorifique d'un type connu est décrit dans le document EP 0 599 610. Dans tout ce qui suit le terme « réservoir » désignera le réservoir de cryogène embarqué, sauf quand une précision désigne un autre réservoir telle que « amont » ou « fixe ».

Les ambiances maintenues à l'intérieur de la chambre froide peuvent être prévues tant pour des produit frais (typiquement une température voisine de 4°C) que pour des produits surgelés (typiquement une température voisine de -20°C).

La présente invention s'intéresse plus particulièrement aux solutions cryogéniques à injection indirecte mais les solutions proposées peuvent être appliquées très avantageusement aux groupes cryogéniques à injection directe d'azote, de $CO_2$ ou de tout autre cryogène.

Dans le cas des injections indirectes, la chaleur extraite de l'air permet, d'abord une évaporation complète du fluide cryogénique circulant dans l'échangeur, puis une élévation de sa température jusqu'à ce qu'elle atteigne une température proche de celle de l'enceinte. Le fluide cryogénique est alors rejeté à l'extérieur après avoir cédé un maximum d'énergie de refroidissement.

Le contrôle de procédé typiquement mis en oeuvre dans de tels camions fonctionnant en injection directe ou indirecte est le plus souvent le suivant :

1- lors de la mise en route du système frigorifique du camion (par exemple au démarrage d'une tournée ou après un arrêt prolongé du système frigorifique pour une raison quelconque) ou encore après une ouverture de porte, on adopte un mode de descente rapide en température (cette industrie nomme cette phase « pull-down »).

2- Une fois la température de consigne atteinte dans la chambre de stockage des produits, on adopte un mode de contrôle/régulation qui permet de maintenir la température de la chambre de stockage des produits à la valeur de la consigne (« maintien »).

Or, les besoins frigorifiques dans chacune de ces deux phases, en termes de puissance frigorifique requise, sont extrêmement différents.

En effet, en phase de « pull down », il est souvent demandé d'avoir une descente rapide en température de l'air de la chambre. Pour obtenir cet effet, il faut fournir une grande puissance frigorifique capable de vaincre l'inertie thermique de tout le système (air, groupe cryogénique, parois du camion) et les entrées de chaleurs à travers les parois du camion et via les ouvertures de ses portes. Ces besoins frigorifiques baissent drastiquement en phase de maintien étant donné que seules les entrées de chaleur à travers les parois persistent.

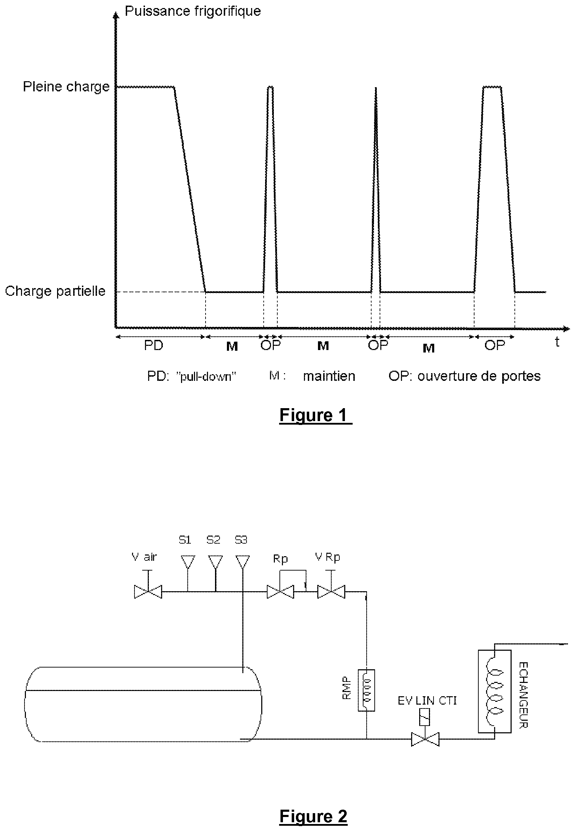

En d'autres termes, les besoins frigorifiques d'un camion durant une tournée donnée oscillent entre deux niveaux que l'on peut qualifier de « pleine charge » et « charge partielle », comme la figure 1 annexée permet de bien le visualiser.

Si la puissance frigorifique en phase de maintien doit absolument atteindre un niveau minimum requis, celle correspondant à la pleine charge reste au choix du concepteur du système frigorifique dans la limite dans normes appliquées dans ce domaine (ATP, DIN, ...) recommandant une puissance du groupe frigorifique installée, au minimum égale à 1,75 fois la puissance à charge partielle, puissance principalement dictée par les apports thermiques à travers les parois (KS$\Delta$T). Bien logiquement, plus la puissance de pleine charge est grande plus on assure une descente et un retour rapide de la température de l'air interne à la chambre à la température de consigne.

Les systèmes cryogéniques existant fonctionnent par exemple avec une pression « nominale » dans le réservoir à un niveau quasi-fixe avoisinant 3,2 barg. La modularité de fonctionnement est aujourd'hui le plus souvent obtenue au travers d'une régulation des vannes d'injection du liquide en mode tout ou rien (« TOR ») ou en mode proportionnelle.

La figure 2 annexée illustre le schéma de principe d'une régulation de pression du réservoir telle que couramment pratiquée actuellement dans ce domaine.

On y retrouve ce que l'homme du métier connaît bien : la voie EV LIN CTI d'alimentation en liquide du ou des échangeurs interne(s) à la chambre du camion, et une voie dite « RMP » (« mise en pression rapide »), de remise en pression du ciel du réservoir.

Ce fonctionnement présente plusieurs inconvénients :

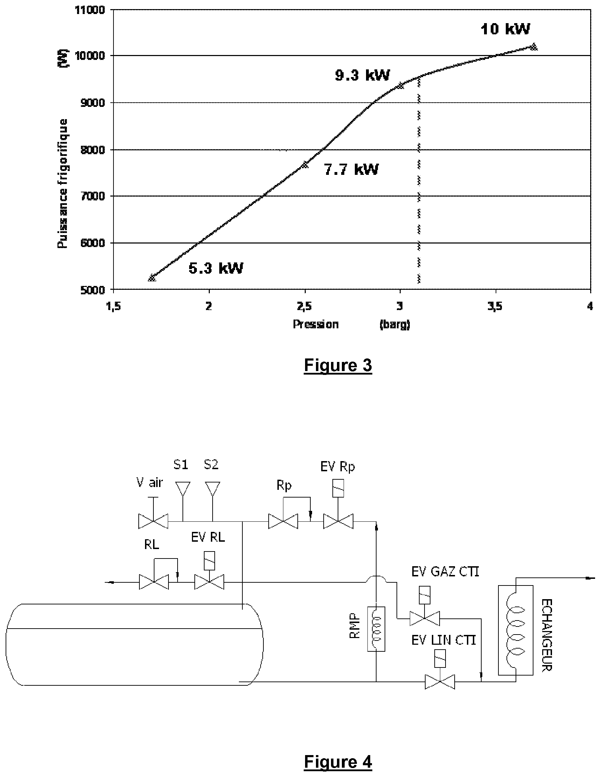

1- si le niveau de pression est inférieur au niveau requis lors du remplissage du réservoir (c'est ce qui se produit fréquemment dans la pratique), la puissance que le groupe cryogénique est sensée produire décroit rapidement. Il en résulte un temps de « pull-down » assez long et une surconsommation nuisible pour le bilan économique du système. La figure 3 annexée illustre ces phénomènes en donnant des résultats expérimentaux montrant cette variation de puissance due à la variation de la pression dans le réservoir ;

2- Par le fait que l'on travaille à une pression du réservoir fixe, l'étendue de la modularité (la différence entre la puissance de pleine charge et celle de charge partielle) reste limitée avec une surconsommation du cryogène due aux effets de l'inertie thermique du système. En d'autres termes, un mode « boost » où l'on voudrait obtenir une puissance frigorifique très élevée est très difficilement atteignable ;

3- La pression nominale du réservoir telle qu'elle est classiquement pratiquée aujourd'hui (par exemple 3.2barg) allonge le temps de remplissage à partir du grand stockage fixe amont (source), qui est généralement maintenu à 4barg environ. Il en résulte une perte de cryogène lors du remplissage sous forme gaz (flash de gaz) car l'écart de pression entre réservoirs fixe et mobile demeure faible, d'où un temps long de remplissage (typiquement 10 à 15mn).

La présente invention propose alors une modification de la configuration du réservoir du camion, et notamment de ce que l'on appelle traditionnellement dans le métier des gaz sa « boite à vannes », pour offrir une plus large modularité de puissance frigorifique des groupes cryogéniques tout en optimisant leur consommation en cryogène.

Comme il apparaitra plus en détails dans ce qui suit, l'invention propose de modifier les conditions de fonctionnement du réservoir actuellement pratiquées, pour lui permettre de fonctionner à une pression variable qui s'adapte de façon automatique selon les besoins frigorifiques du camion. Pour ce faire, les travaux menés à bien par la Demanderesse ont fait apparaître le fait que deux modifications se révèlent tout particulièrement avantageuses :

1- abaisser la pression « nominale » du réservoir embarqué à une pression n'excédant pas 2barg, et préférentiellement à 1,5barg pour les groupes cryogéniques à injection indirecte et à 1barg pour les groupes cryogéniques à injection directe. Cette première modification s'opère aisément, par exemple en modifiant le tarage d'un déverseur à la valeur souhaitée, déverseur correctement positionné sur une ligne liée.

2- associer un système de pressurisation rapide du réservoir, qui s'active au moment requis, permettant d'augmenter la pression dans le réservoir quand la procédure le nécessite, et d'assurer ainsi un débit du cryogène plus élevé en provenance de ce réservoir, d'où une puissance frigorifique plus élevée.

Le besoin en puissance du système étant variable et directement lié à la phase du fonctionnement (pleine charge ou charge partielle), le dispositif proposé doit permettre une utilisation variable de la pression de cryogène dans le réservoir de façon optimale.

La figure 4 annexée illustre un mode de réalisation de l'invention.

Par défaut la pression du réservoir est maintenue à une pression dite nominale, c'est-à-dire à une pression basse, par exemple entre 1.5barg et 2barg. Cette pression est maintenue par le déverseur RL équipé en son amont d'une électrovanne (EV RL) normalement ouverte.

Quand la demande de puissance à fournir est importante (notamment pendant la phase de « pull-down » ou encore après des ouvertures de portes), le circuit de mise en pression rapide RMP est activé. L'électrovanne EV Rp s'ouvre et l'électrovanne EV RL se ferme. Une quantité de cryogène est vaporisée par l'intermédiaire du réchauffeur de mise en pression RMP qui a pour effet d'augmenter la pression dans le ciel gazeux du réservoir. Le régulateur de pression amont (déverseur) Rp est réglé pour rester ouvert jusqu'à une pression de réglage par exemple voisine de 4barg. Le circuit RMP est dimensionné pour assurer une augmentation de pression dans le réservoir en un temps compatible avec le temps de « Pull Down » de la chambre à refroidir.

Ce circuit de mise en pression est activé tant que la demande de puissance est importante.

Quand la demande de puissance diminue, i.e soit en phase finale de « pull down » soit en phase de « charge partielle » (maintien), le circuit RMP est désactivé.

A ce stade la pression dans le réservoir est au point haut, par exemple environ 4 barg.

Dans ces conditions le besoin en puissance est faible, il peut alors être avantageux d'utiliser la chaleur sensible disponible du gaz pour fournir partiellement la puissance au système de refroidissement, le circuit EV gaz est alors activé. Le gaz sous pression est injecté dans l'échangeur : on ferme EV Rp, on ferme EV LIN CTI et on ouvre EV Gas CTI jusqu'à l'obtention du niveau bas de la pression. On ferme ensuite cette vanne EV Gas CTI et on ouvre la vanne EV LIN CTI.

Ce mode de fonctionnement permet de combiner deux fonctions et d'augmenter l'efficacité de la solution :

1- La dépressurisation du réservoir dans l'échangeur sans perte d'enthalpie, et sans mise à l'air libre ;
2- L'utilisation de la chaleur sensible du gaz en phase de charge partielle.

La gestion automatique de la régulation est réalisée par un contrôle de procédé adapté que l'homme du métier comprend ici sans qu'il soit nécessaire de développer plus avant. Les seuils de pressions sont déterminés pour optimiser le besoin en puissance frigorifique à fournir et pour garantir l'intégrité du réservoir et l'optimisation de la consommation du système.

Pour ce faire, on utilisera par exemple la température comme indicateur de la phase de fonctionnement. Plus précisément, on suivra par exemple en continue, l'écart de température entre la température de reprise d'air (à l'entrée de l'échangeur CTI) et la température de consigne souhaitée :

$$\Delta T = T_{\text{entrée air}} - T_{\text{cons}}$$

($T_{\text{entrée air}}$ : la température au sein de l'air entrant au contact de l'échangeur du fait de l'action de la ventilation)

($T_{\text{cons}}$ : température souhaitée à l'intérieur de la chambre de stockage des produits)

Le mode de pleine charge se caractérise par une valeur élevée de $\Delta T$, typiquement supérieur à 5K. Dans ce mode, la pression doit être à son niveau maximum pour délivrer le maximum de puissance frigorifique.

Lorsque cet écart $\Delta T$ est par exemple strictement inférieur à 2K, on estime que le système est en fonctionnement à charge partielle. Dans ce mode, la pression peut être à son niveau minimum, donc un débit de cryogène liquide minimum et une puissance frigorifique minimum.

Entre les deux niveaux d'écart de température, le système est considéré comme en transition d'un mode vers un autre, la pression peut se situer également à un niveau intermédiaire entre les deux niveaux haut et bas de la pression.

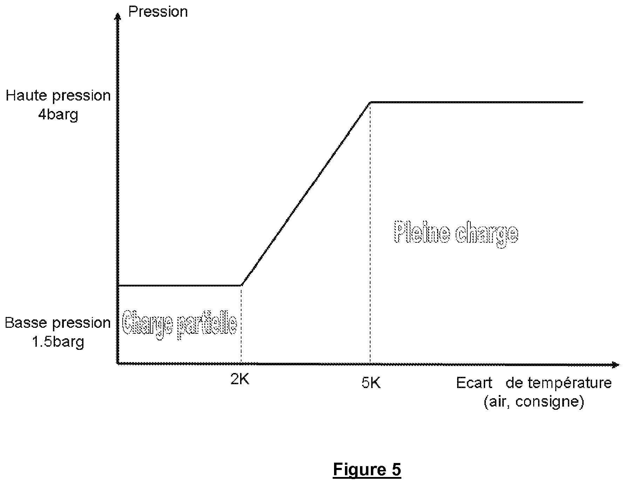

La figure 5 offre une représentation schématique de ces trois modes de fonctionnement, l'écart de température et le niveau de pression associé.

En fonction de la pression du réservoir et de l'écart de température mesuré en temps réel, on active alors ou non le système de pressurisation rapide jusqu'à l'obtention de la pression désirée comme indiqué dans la figure 3 : conformément au schéma de la figure 4, l'électrovanne EV Rp est ouverte et l'on ferme l'électrovanne EV RL.

Si au contraire, la pression dans le réservoir est au dessus de celle requise, on dépressurise le réservoir tout en utilisant la vapeur saturée de son ciel gazeux pour alimenter les échangeurs CTI : conformément au schéma de la figure 4, on ferme EV Rp, et on ouvre EV Gas CTI jusqu'à l'obtention du niveau bas de la pression requis. On ferme ensuite cette vanne EV Gas CTI et on ouvre à nouveau la vanne EV LIN CTI.

Ainsi, en offrant toute la souplesse de fonctionnement recherchée comme explicité plus haut, le système proposé selon la présente invention est facile à opérer par rapport au système actuellement pratiqué dans ce domaine tel qu'illustré en figure 2 : il ne nécessite que l'installation de deux électrovannes supplémentaires pilotées par le même système de contrôle déjà présent sur les installations existantes. Le coût engendré par cette modification est très peux élevé par rapport aux économies de consommations qui sont obtenues.

Ainsi on a évoqué dans ce qui précède les dessins annexés suivants :

- la figure 1 permet de visualiser la variation des besoins frigorifiques d'un camion selon ses phases de fonctionnement.
- la figure 2 illustre le schéma de principe d'une régulation de pression du réservoir telle que couramment pratiquée actuellement dans ce domaine.
- la figure 3 permet de visualiser la variation de la puissance frigorifique en fonction de la pression dans le réservoir.
- la figure 4 fournit le schéma de principe d'un exemple de réalisation de la régulation de pression du réservoir selon l'invention.
- la figure 5 représente la variation de la pression dans le réservoir en fonction du mode d'opération du système frigorifique i.e du besoin de puissance frigorifique.

La présente invention concerne alors un procédé de gestion du fonctionnement d'un camion de transport frigorifique de produits thermosensibles, du type à injection indirecte, où le camion est muni :

- d'au moins une chambre de stockage des produits,
- d'une réserve d'un fluide cryogénique tel l'azote liquide,
- d'un système d'échangeur thermique interne à ladite au moins une chambre, dans lequel circule le fluide cryogénique,
- d'un système de circulation d'air, par exemple de type ventilateurs, apte à mettre en contact l'air interne à la chambre avec les parois froides du système d'échangeur thermique,
- de capteurs de température aptes à déterminer la température de l'atmosphère interne à ladite au moins une chambre ($T_{\text{int}}$) d'une part et celle de l'air entrant au contact de l'échangeur thermique interne du fait de l'action de la ventilation ($T_{\text{entrée air}}$),
- d'un circuit de mise en pression rapide (RMP) de la dite réserve, circuit comprenant une ligne connectée en sa partie amont à la phase liquide stockée dans ladite réserve et en sa partie aval à la phase gazeuse stockée dans ladite réserve, ligne comprenant successivement un échangeur/réchauffeur (RMP), une vanne (EV Rp) et un déverseur (Rp) ;

- ainsi que d'une unité de gestion et de commande, apte à réguler la température interne $T_{int}$ à une valeur de consigne $T_{cons}$,

se caractérisant par la mise en oeuvre des mesures suivantes :

- on détermine en temps réel la grandeur $\Delta T = T_{entrée\ air} - T_{cons}$ ;
- si $\Delta T$ est supérieure à une valeur de consigne haute $\Delta T_{cons\ H}$ on active le circuit de mise en pression rapide RMP en ouvrant ladite vanne du circuit de mise en pression (EV Rp) afin de vaporiser du cryogène dans ledit échangeur/réchauffeur et ainsi augmenter la pression dans le ciel gazeux de la réserve.

Selon un des aspects de l'invention, quand $\Delta T$ passe en deçà d'une valeur de consigne basse $\Delta T_{cons\ B}$ on désactive alors le circuit de mise en pression rapide RMP en fermant ladite vanne du circuit de mise en pression (EV Rp).

Selon un autre des modes de mise en oeuvre de l'invention, on dispose d'un circuit gazeux, circuit comprenant une ligne gaz connectée en sa partie amont à la phase gazeuse stockée dans ladite réserve et en sa partie aval à une ligne alimentant ledit échangeur thermique interne à la chambre, ligne comprenant une vanne gaz (EV Gaz CTI), et quand $\Delta T$ passe en deçà d'une valeur de consigne basse $\Delta T_{cons\ B}$, on désactive le circuit de mise en pression rapide RMP et on active le circuit gazeux, en ouvrant ladite vanne gaz (EV Gaz CTI) pour alimenter en gaz ledit échangeur thermique interne à la chambre, alimentation en gaz maintenue jusqu'à l'obtention d'un niveau bas de pression dans ladite réserve.

## Revendications

1.  **Procédé de gestion du fonctionnement d'un camion de transport frigorifique de produits thermosensibles,** du type à injection indirecte, où le camion est muni :

    - d'au moins une chambre de stockage des produits,
    - d'une réserve d'un fluide cryogénique tel l'azote liquide,
    - d'un système d'échangeur thermique interne à ladite au moins une chambre, dans lequel circule le fluide cryogénique,
    - d'un système de circulation d'air, par exemple de type ventilateurs, apte à mettre en contact l'air interne à la chambre avec les parois froides du système d'échangeur thermique,
    - de capteurs de température aptes à déterminer la température de l'atmosphère interne à ladite au moins une chambre ($T_{int}$) d'une part et celle de l'air entrant au contact de l'échangeur thermique interne du fait de l'action de la ventilation ($T_{entrée\ air}$),
    - d'un circuit de mise en pression rapide (RMP) de la dite réserve, circuit comprenant une ligne connectée en sa partie amont à la phase liquide stockée dans ladite réserve et en sa partie aval à la phase gazeuse stockée dans ladite réserve, ligne comprenant successivement un échangeur/réchauffeur (RMP), une vanne (EV Rp) et un déverseur (Rp) ;
    - ainsi que d'une unité de gestion et de commande, apte à réguler la température interne $T_{int}$ à une valeur de consigne $T_{cons}$,

    **se caractérisant par** la mise en oeuvre des mesures suivantes :

    - on détermine en temps réel la grandeur $\Delta T = T_{entrée\ air} - T_{cons}$ ;
    - si $\Delta T$ est supérieure à une valeur de consigne haute $\Delta T_{cons\ H}$ on active le circuit de mise en pression rapide RMP en ouvrant ladite vanne du circuit de mise en pression (EV Rp) afin de vaporiser du cryogène dans ledit échangeur/réchauffeur et ainsi augmenter la pression dans le ciel gazeux de la réserve.

2.  Procédé de gestion selon la revendication 1, **se caractérisant en ce que** l'on dispose d'un circuit gazeux, circuit comprenant une ligne gaz connectée en sa partie amont à la phase gazeuse stockée dans ladite réserve et en sa partie aval à une ligne alimentant ledit échangeur thermique interne à la chambre, ligne comprenant une vanne gaz (EV Gaz CTI), et **en ce que** quand $\Delta T$ passe en deçà d'une valeur de consigne basse $\Delta T_{cons\ B}$, on désactive le circuit de mise en pression rapide RMP et on active le circuit gazeux, en ouvrant ladite vanne gaz (EV Gaz CTI) pour alimenter en gaz ledit échangeur thermique interne à la chambre, alimentation en gaz maintenue jusqu'à l'obtention d'un niveau bas de pression dans ladite réserve.

3.  Procédé de gestion selon la revendication 1, **se caractérisant en ce que** quand $\Delta T$ passe en deçà d'une valeur de consigne basse $\Delta T_{cons\ B}$ on désactive le circuit de mise en pression rapide RMP en fermant ladite vanne du circuit de mise en pression (EV Rp).

## Patentansprüche

1.  Verfahren zur Verwaltung des Betriebs eines Kühltransport-Lastwagens für wärmeempfindliche Produkte, des Typs mit indirekter Einspritzung, wobei der Lastwagen ausgestattet ist:

- mit zumindest einer Lagerkammer für die Produkte,
- mit einer Reserve für eine kryogene Flüssigkeit, wie flüssigen Stickstoff,
- mit einem Wärmetauschersystem innerhalb der zumindest einen Kammer, in dem die kryogene Flüssigkeit zirkuliert,
- mit einem Luftzirkulationssystem, beispielsweise des Typs von Lüftern, das imstande ist, die Luft innerhalb der Kammer mit den kalten Wänden des Wärmetauschersystems in Kontakt zu bringen,
- mit Temperatursensoren, die imstande sind, die Temperatur der Atmosphäre innerhalb der zumindest einen Kammer ($T_{int}$) einerseits, und jene der eintretenden Luft in Kontakt mit dem Wärmetauscher im Inneren durch die Wirkung der Lüftung ($T_{Lufteintritt}$) zu bestimmen,
- mit einem Kreislauf zur raschen Druckbeaufschlagung (RMP) der Reserve, wobei der Kreislauf eine Leitung umfasst, die in ihrem stromaufwärts befindlichen Abschnitt mit der Flüssigphase verbunden ist, die in der Reserve gelagert ist, und in ihrem stromabwärts befindlichen Abschnitt mit der Gasphase, die in der Reserve gelagert ist, wobei die Leitung nacheinander einen Tauscher/Erhitzer (RMP), ein Ventil (EV Rp) und einen Auslauf (Rp) umfasst;
- sowie mit einer Verwaltungs- und Steuereinheit, die imstande ist, die Innentemperatur $T_{int}$ auf einen Sollwert $T_{Sollw.}$ zu regeln,

**gekennzeichnet durch** die Umsetzung der folgenden Maßnahmen:

- man bestimmt in Echtzeit die Größe $\Delta T = T_{Lufteintritt} - T_{Sollw.}$;
- wenn $\Delta T$ größer ist, als ein oberer Sollwert $\Delta T_{Sollw.H}$ aktiviert man den Kreislauf zur raschen Druckbeaufschlagung RMP, indem man das Ventil des Kreislaufs zur Druckbeaufschlagung (EV Rp) öffnet, um Kryogen in den Tauscher/Erhitzer zu zerstäuben, und somit den Druck im Gasraum der Reserve zu erhöhen.

**2.** Verfahren zur Verwaltung nach Anspruch 1, **dadurch gekennzeichnet, dass** man über einen Gaskreislauf verfügt, wobei der Kreislauf eine Gasleitung umfasst, die in ihrem stromaufwärts befindlichen Abschnitt mit der Gasphase verbunden ist, die in der Reserve gelagert ist, und in ihrem stromabwärts befindlichen Abschnitt mit einer Leitung, die den Wärmetauscher innerhalb der Kammer versorgt, wobei die Leitung ein Gasventil (EV Gas CTI) umfasst, und dadurch, dass, wenn $\Delta T$ unter einen unteren Sollwert

$\Delta T_{Sollw.B}$ fällt, man den Kreislauf zur raschen Druckbeaufschlagung RMP deaktiviert, und man den Gaskreislauf aktiviert, indem man das Gasventil (EV Gas CTI) öffnet, um den Wärmetauscher innerhalb der Kammer mit Gas zu versorgen, wobei die Gasversorgung aufrecht erhalten wird, bis man ein niedriges Druckniveau in der Reserve erhält.

**3.** Verfahren zur Verwaltung nach Anspruch 1, **dadurch gekennzeichnet, dass**, wenn $\Delta T$ unter einen unteren Sollwert $\Delta T_{Sollw.B}$ fällt, man den Kreislauf zur raschen Druckbeaufschlagung RMP deaktiviert, indem man das Ventil des Kreislaufs zur Druckbeaufschlagung (EV Rp) schließt.

**Claims**

**1.** Method of managing the operation of a refrigerated truck for transporting heat-sensitive products, of the indirect-injection type, in which the truck is provided with:

- at least one chamber for storing the products,
- a reserve of a cryogenic fluid, such as liquid nitrogen,
- a heat exchanger system inside said at least one chamber, in which the cryogenic fluid flows,
- an airflow system, such as fans, capable of bringing the air inside the chamber into contact with the cold walls of the heat exchanger system,
- temperature sensors capable of determining the temperature of the atmosphere inside said at least one chamber ($T_{int}$) on the one hand, and that of the air coming into contact with the internal heat exchanger as a result of the action of the fan ($T_{air\ inlet}$),
- a rapid-pressurisation circuit (RMP) of said reserve, said circuit comprising a line having an upstream portion connected to the liquid phase stored in said reserve and a downstream portion connected to the gas phase stored in said reserve, said line successively comprising an exchanger/heater (RMP), a valve (EV Rp) and a regulator (Rp);
- in addition to a management and control unit capable of regulating the internal temperature $T_{int}$ to a setpoint value $T_{setpoint}$,

**characterised by** the implementation of the following measures:

- the magnitude $\Delta T$ $T_{air\ inlet} - T_{setpoint}$ is determined in real time;
- if $\Delta T$ is greater than an upper setpoint value $\Delta T_{U\ setpoint}$, the rapid pressurisation circuit RMP is activated by opening said pressurisation circuit valve (EV Rp) so as to vaporise cryogen inside said exchanger/heater and thus increase the pressure in the ullage space of the reserve.

2. Management method according to claim 1, **characterised in that** it has a gas circuit, said circuit comprising a gas line having an upstream portion connected to the gas phase stored in said reserve and a downstream portion connected to a line supplying said heat exchanger inside the chamber, said line comprising a gas valve (EV Gas CTI), and **in that** when $\Delta T$ falls below a lower setpoint value $\Delta T_{L\ setpoint}$, the rapid pressurisation circuit RMP is deactivated and the gas circuit is activated, by opening said gas valve (EV Gas CTI) so as to supply gas to said heat exchanger inside the chamber, said gas supply being maintained until a low pressure level is obtained within said reserve.

3. Management method according to claim 1, **characterised in that** when $\Delta T$ falls below a lower setpoint value $\Delta T_{L\ setpoint}$, the rapid pressurisation circuit RMP is deactivated by closing said valve of the pressurisation circuit (EV Rp).

Figure 1

Figure 2

**Figure 3**

**Figure 4**

**Figure 5**

**EP 3 046 788 B1**

## RÉFÉRENCES CITÉES DANS LA DESCRIPTION

**Documents brevets cités dans la description**

- EP 0599610 A